# EUROPEAN PATENT SPECIFICATION

(11) **EP 0 909 724 B1**
(45) Date of publication and mention of the grant of the patent: **10.04.2002**
(21) Application number: 97117764.7
(22) Date of filing: 14.10.1997
(51) Int. Cl.: B65G 1/00, B65G 47/64, B65G 47/71

(54) **Take-off and clearing station for products arranged in rows on a belt conveyor**
Station zum Entfernen und Abführen von in Reihen angeordneten Produkten auf einem Förderband
Station pour retirer et évacuer des produits arrangés en lignes sur un transporteur à bande

(43) Date of publication of application: 21.04.1999
(73) Proprietor: P.F.M. S.p.A., 36036 Torrebelvicino (Vicenza) (IT)
(72) Inventor: Cinquegrani, Roberto, 27029 Vigevano, Pavia (IT)
(74) Representative: Petraz, Gilberto Luigi

(56) References cited:
- WO-A-97/33820
- DE-A- 4 309 767
- US-A- 4 867 299
- PATENT ABSTRACTS OF JAPAN vol. 016, no. 250 (M-1262), 8 June 1992 & JP 04 059511 A (MATSUSHITA ELECTRIC WORKS LTD), 26 February 1992,
- PATENT ABSTRACTS OF JAPAN vol. 012, no. 121 (M-686), 15 April 1988 & JP 62 249818 A (ISHIKAWAJIMA HARIMA HEAVY IND CO LTD), 30 October 1987,

## Description

This invention relates to distribution lines for products previously arranged in rows on a belt conveyor, and more particularly to the take-off and clearing stations forming part of such lines.

As known to the expert of the art, a classic example of a distribution line of this type is a line for distributing oven products originating from a baking oven and arranged on a main belt conveyor in rows (ie arranged equidistant in rows perpendicular to the direction of advancement of the belt conveyor), to feed the products to one or more packaging machines. In addition to the said main belt conveyor on which the products are located in rows, such a line comprises a take-off and clearing station for each packaging machine, and a relative removing belt conveyor which receives one row of products at a time from the relative take-off and clearing station, to deposit it on a removing belt conveyor feeding a relative packaging machine.

Known take-off and clearing stations basically comprise a rectangular rocker plate rotatable about a horizontal side lying perpendicular to the direction of advancement of the main belt conveyor and at a lower level than the plane in which said belt moves, the rocker plate being positioned in correspondence with an interruption in the main belt conveyor. A portion of this latter downstream of said interruption can be raised such that by rotating said rocker plate, that side of this latter opposite that about which said plate rocks can be brought substantially to the level of the plane in which that portion of the main belt conveyor upstream of the interruption moves, the rocker plate hence being inclined so that those products of a row which reach its edge slide by gravity along the inclined surface formed by the rocker plate when in this angular position, until they rest against a pusher which follows the rocker plate in its rocking movement. If the rocker plate is now rotated into a horizontal position and the downstream portion of the main belt conveyor is relowered, the initial situation is again attained. By now operating the pusher for the rocker plate, that row of products lying on the rocker plate can be moved onto a removing belt conveyor which is adjacent to the rocker plate when in its horizontal position and extends, when viewed in plan, in a direction perpendicular to the direction of advancement of the main belt conveyor, to feed a relative packaging machine.

The described cycle can be repeated to withdraw from the main belt conveyor a further product to be fed to the relative packaging machine. In the meantime, other rows can be made to proceed along the main belt conveyor to be withdrawn by possible other take-off and clearing stations positioned downstream to feed other packaging machines.

The aforedescribed take-off and clearing station has certain drawbacks. Firstly, the most recent packaging machines have a very high packaging rate such that one station of the described type is unable to feed the relative packaging machine at a speed enabling it to operate at its maximum packaging rate. Hence the packaging machine cannot work at its maximum packaging capacity. To remedy this drawback it has been considered to feed a single packaging machine by two take-off and clearing stations of the aforedescribed type, to utilize the full machine capacity. However this involves a considerable increase in the cost of the line and the need to lengthen the main belt conveyor, which hence requires more space.

A further drawback derives from the fact that certain products (for example because they are sticky or because they soil the surface on which they rest) have difficulty in sliding by gravity along the inclined surface formed by the said rocker plate when in its inclined position. It is apparent that this negatively affects the proper operation of the entire distribution line.

Another example of distribution line is described in document JP 622 49 818 A, wherein the line is provided with two conveyors movable upwardly and downwardly between an upper position and a lower position, to receive products from a main conveyor and to deliver these products to two removing units.

An object of the present invention is to provide a take-off and clearing station for rows of products which enables a much larger quantity of products to be distributed than by known take-off and clearing stations. In this manner even those packaging machines with the highest packaging speed can be adequately fed.

A further object of the invention is to provide a take-off and clearing station which operates regularly even if the products to be withdrawn and distributed are sticky or soil the surface on which they rest.

It should be noted at this stage that the products concerned can be other than oven products provided they are products arranged in rows on a belt conveyor to be fed regularly, in a line, to any machine, even though in effect the station of the present invention was designed having distribution lines for oven products to be fed to packaging machines in mind.

Said object is attained by the take-off and clearing station as defined in claim 1.

The take-off and clearing station of the present invention enables the number of products fed to a packaging machine per unit of time to be doubled compared with that of the initially described known station. In this manner even the most modern packaging machines can be operated at their maximum rate without having to increase the number of stations, while still maintaining substantially the same overall dimensions as a traditional distribution line.

The invention will be more apparent from the following description of one embodiment thereof.

In this description reference will be made to the accompanying drawings, on which:
Figure 1 is a side view, with various parts shown sectioned, of a portion of a distribution line comprising a take-off and clearing station of the present invention;
Figure 2 is a partial vertical section therethrough on the line 2-2 of Figure 1, again with various parts shown sectioned; and

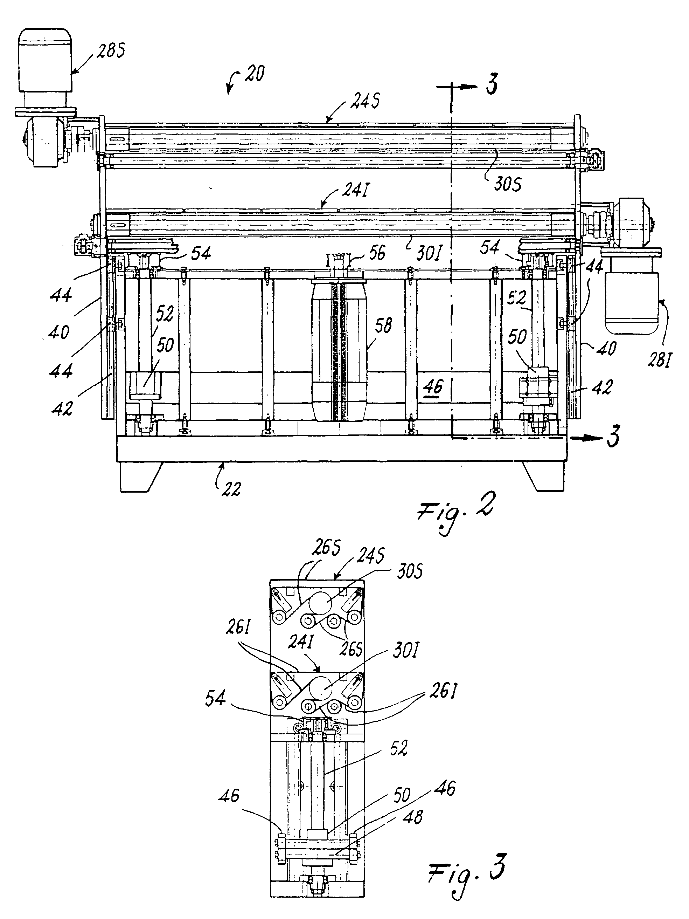

Figure 3 is a partial vertical section therethrough on the line 3-3 of Figure 2.

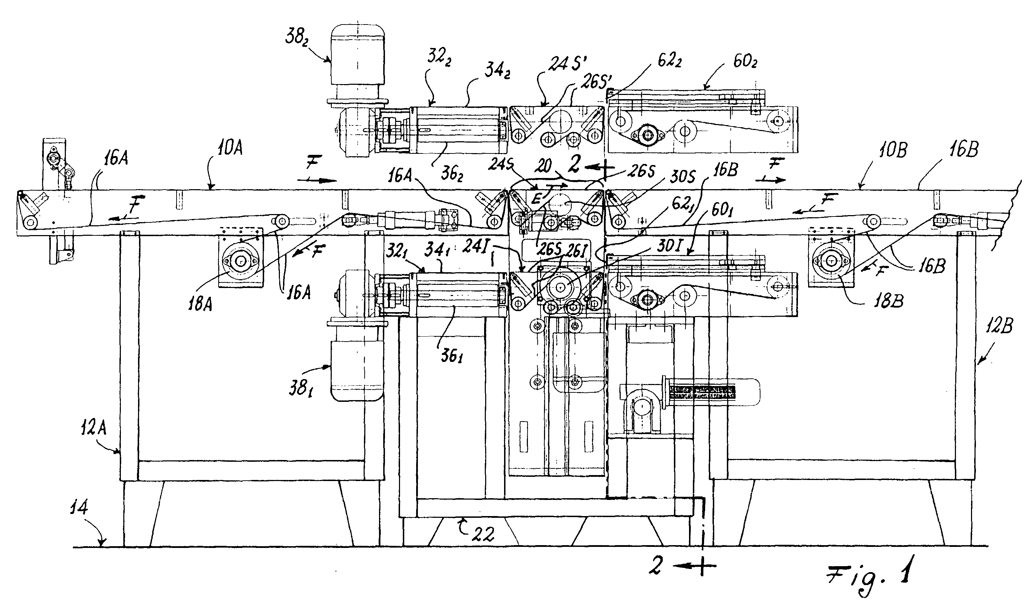

From Figure 1 it can be seen that the illustrated portion of a distribution line for products arranged in rows comprises a conventional main belt conveyor, of which two consecutive but spaced-apart portions 10A and 10B are visible. Each of said portions 10A and 10B is carried by a respective usual support structure (12A and 12B) which rests on the ground 14. The relative belt (16A and 16B) is mounted about a usual series of pulleys, all idle except one (18A and 18B) which is driven by a relative geared motor (not shown) and which when operated drives the belt (16A and 16B) in the direction of the arrows F. Consequently, on feeding the left end of the portion 10A of the main belt conveyor with products (not shown) aligned in equidistant rows extending in a direction perpendicular to the plane of the drawing, the products of each row also being equidistant, these rows advance towards the right until they reach the left end of the portion 10A. The products then move as described in the ensuing description of operation of the station according to the present invention. The said products can for example be oven products (such as biscuits) leaving a relative baking oven to be packaged. As already stated, the products can however be of the most varied types, provided they are required to be arranged finally as one or more lines of products (each line lying on its own removing belt conveyor) and start as a series of products arranged in rows on a main belt conveyor.

As can be seen from Figure 1, between the two portions 10A and 10B of the main belt conveyor there is positioned a take-off and clearing station 20 provided with a support structure 22 which also rests on the ground 14. The station 20 comprises a pair of fairly short superposed identical belt conveyors (their length basically depending on the length of the products to be received on them), namely an upper belt conveyor 24S and a lower belt conveyor 24I, each of their two belts 26S and 26I being mounted conventionally about pulleys. One (30S and 30I) of these pulleys (of which the pulley 30I is shown in Figure 1 virtually complete, whereas the pulley 30S is shown only schematically for simplicity) is driven by a relative geared motor (28S and 28I respectively), the other pulleys visible on the figures being idle.

As already stated, the pair of belt conveyors 24S and 24I is movable between two positions, the first of which is shown in Figure 1 in which it can be seen that the upper conveyor 24S is at the same elevation as the main belt conveyor (10A and 10B), whereas the lower belt conveyor 24I is at the same elevation as a first removing belt conveyor 32₁ which flanks it to extend perpendicular to the direction of advancement of the main belt conveyor (10A and 10B), ie perpendicular to the plane of Figure 1. Again in the first removing belt conveyor 32₁ the relative belt 34₁ winds in the usual manner about pulleys, of which only one 36₁ is shown in Figure 1, that being driven by a geared motor 38₁.

The pair of belt conveyors 24S and 24I can also assume a second position (shown only partially in Figure 1, which shows by lighter lines in this position only the upper belt conveyor indicated by 24S₁) in which the upper belt conveyor has the same elevation as a second removing belt conveyor 32₂, which flanks it. The second belt conveyor 32₂ is identical to the aforedescribed first removing belt conveyor 32₁, so that in the figure the same reference numerals have been used for it but with the subscript 2 instead of 1, and except that the geared motor 38₂ is inverted for space reasons.

When the pair of belt conveyors 24S and 24I is in said second position, the lower conveyor (which as stated is not shown in Figure 1 for simplicity) is in exactly the same position as that assumed by the upper belt conveyor 24S when in the first position, ie at the same level as the main belt conveyor 10A, 10B.

The pair of belt conveyors 24S and 24I is supported by a pair of parallel vertical shoulders 40, one for each side, each of which is carried by a more inner carriage 42 vertically slidable by virtue of four idle wheels 44 positioned two per side and fixed to the support structure 22 of the take-off and clearing station 20. The two carriages 42 are connected together by two parallel horizontal longitudinal members 46 connected together in proximity to their ends by relative cross-members 48, to each of which there is fixed a lead nut 50 engaged by a relative vertical screw 52. The two ends of this latter are rotatably supported on the structure 22 of the station 20. On the upper end of the two screws 52 there is keyed a relative pulley 54 about which there is mounted a belt (not shown for simplicity) which also engages a drive pulley 56 driven by a geared motor 58 fixed to the support structure 22. Consequently, by operating the geared motor 58 the pair of belt conveyors 24S and 24I can be raised or lowered, depending on the direction of rotation of the motor shaft.

With each of the two removing belt conveyors 31₁ and 32₂ there corresponds a pusher means 60₁ and 60₂, the purpose of which is apparent to an expert of the art, but will be explained hereinafter during the description of operation of the illustrated distribution line.

This operation will now be briefly described, with particular emphasis on the take-off and clearing station 20.

It will be assumed that the main belt conveyor (10A and 10B) is in operation, the relative belts moving in the direction indicated by the arrows F in Figure 1. It will also be assumed that the pair of belt conveyors 24S and 24I of the take-off and clearing station 20 is in its first position, so that the the upper belt conveyor 24S is at the level of the main belt conveyor (10A and 10B), and that the relative belt 26S is moving in the direction of the arrow E (Figure 1), being driven by the relative geared motor 28S (Figure 2). Consequently, when a row of products (not shown) reaches the right end of the portion 10A of the main belt conveyor, this row passes directly onto the upper belt conveyor 24S, after which this latter is halted. By now operating the geared motor 58 (Figure 2), the pair of belt conveyors 24S and 24I passes from its first position to its second position in which the upper belt conveyor is at the level of the second rocker belt conveyor 32₂ (as indicated by the reference numeral 24S' in Figure 1). By operating the relative pusher 60₂ the corresponding thrust bar 62₂ pushes all those products of the row lying on the upper belt conveyor (24S') onto the rocker belt conveyor 32₂, ready to be conveyed for example, by the operation of this latter, to a packaging machine.

While this operation is proceeding, the lower belt conveyor is at the level of the main belt conveyor, so that it can receive from this latter a further row of products (as will be apparent to an expert of the art, some rows can in the meantime have been passed beyond, to proceed along the downstream portion 10B of the main belt conveyor to feed other possible take-off and clearing stations positioned downstream, or to be fed towards a final accumulation position). Consequently when the pair of belt conveyors 24S and 24I is returned to its first position, the lower belt conveyor 24I is at the level of the first rocker belt conveyor 32₁. By operating the relative pusher 60₂ the corresponding thrust bar 62₁ pushes the row of products lying on the lower belt conveyor 24I onto the first rocker belt conveyor 32₁, ready to be removed by the operation of this latter. Simultaneously the upper belt conveyor 24S can receive a further row of products, enabling the cycle to be repeated.

The distribution line, and hence the take-off an clearing stations, are conveniently controlled by a control unit of usual type.

## Claims

1. A take-off and clearing station (20) for distribution lines for products previously arranged in rows on a main belt conveyor, said station (20) being interposed between two consecutive portions (10A, 10B) of a main belt conveyor on which the products lie in rows, comprising a pair of superposed identical belt conveyors (24S, 24I) of the same width as the main belt conveyor and aligned with this latter when viewed in plan, said pair of belt conveyors (24S, 24I) being movable vertically between two positions, namely:
a first position in which the upper belt conveyor (24S) is at the same elevation as the main belt conveyor, whereas the lower belt conveyor (24I) is at the same elevation as an adjacent first removing belt conveyor (32₁) extending, when viewed in plan, perpendicular to the main belt conveyor; and
a second position in which the lower belt conveyor (24I) is at the same elevation as the main belt conveyor, whereas the upper belt conveyor (24S) is at the same elevation as an adjacent second removing belt conveyor (32₂) also extending, when viewed in plan, perpendicular to the main belt conveyor;
with the first and second removing belt conveyor (32₁, 32₂) there being associated a relative pusher (60₁, 60₂) arranged to transfer the row of products present on the relative belt conveyor (24S, 24I) of the pair from this latter to the corresponding removing belt conveyor (32₁, 32₂).

2. A take-off and clearing station (20) as claimed in claim 1, wherein the pair of belt conveyors (24S, 24I) is supported by a pair of parallel vertical shoulders (40), one for each side, each of which is carried by a more inner carriage (42) vertically slidable by virtue of four idle wheels (44) positioned two per side and fixed to the support structure (22) of the take-off and clearing station (20), the two carriages (42) being connected together by two parallel horizontal longitudinal members (46) connected together in proximity to their ends by relative cross-members (48), to each of which there is fixed a lead nut (50) engaged by a relative vertical screw (52), the two ends of this latter being rotatably supported on the station structure (22), on the upper end of the two screws (52) there being keyed a relative pulley (54) about which there is mounted a belt which also engages a drive pulley (56) driven by a geared motor (58) fixed to the support structure (22).

## Patentansprüche

1. Station (20) zum Entfernen und Abführen von in Reihen auf Verteilungslinien angeordneten Produkten, die vorher auf einem Hauptförderband angeordnet worden sind, wobei diese Station (20) zwischen zwei aufeinanderfolgenden Abschnitten (10A, 10B) des Hauptförderbandes zwischengeschaltet ist, auf denen die Produkte in Reihe angeordnet liegen, mit einem Paar von übereinanderliegenden identischen Förderbändern (24S, 24I), die die gleiche Breite wie das Hauptförderband aufweisen und die mit dem Hauptförderband ausgerichtet sind, wenn man von oben darauf blickt, wobei das Paar von Förderbändern (24S, 24I) vertikal zwischen zwei Positionen hin und her bewegbar ist, nämlich:
in eine erste Position, in der das obere Förderband (24S) in einer Höhe angeordnet ist, die gleich der Höhe des Hauptförderbandes ist, während das untere Förderband (24I) auf einer Höhe angeordnet ist, die gleich der Höhe eines benachbarten ersten Ableitförderbandes (32₁) ist, wenn man von oben darauf blickt, und senkrecht zu dem Hauptförderband verläuft; und
in eine zweite Position, in der das untere Förderband (24I) in einer Höhe angeordnet ist, die gleich der Höhe des Hauptförderbandes ist, während das obere Förderband (24S) auf einer Höhe angeordnet ist, die gleich der Höhe eines benachbarten zweiten Ableitförderbandes (32₂) ist, wenn man von oben darauf blickt, und senkrecht zu dem Hauptförderband verläuft;
wobei das erste Ableitförderband (32₁) und das zweite Ableitförderband (32₂) einer Relativdruckeinrichtung (60₁, 60₂) zugeordnet sind, die vorgesehen ist, um die Reihe von Produkten, die sich auf den zugehörigen Förderbändern (24S, 24I) befinden, auf das entsprechende Ableitförderband (32₁, 32₂) zu verlagern.

2. Station (20) zum Entfernen und Abführen nach Anspruch 1, wobei das Paar von Förderbändern (24S, 24I) durch ein Paar von parallel und vertikal verlaufenden Schulterträgern (40) getragen ist, einer an jeder Seite, wobei davon jeder durch einen weiter innen liegenden Träger (42) abgestützt ist, der vertikal verlagerbar ist, nämlich durch vier Leerlaufrollen (44), die jeweils paarweise auf einer Seite angeordnet sind und an der Tragstruktur (22) der Station (20) befestigt sind, wobei die beiden Träger (42) mittels zweier paralleler horizontaler Längselemente (46) miteinander verbunden sind, die wiederum in der Nähe der Enden miteinander durch zugehörige Querelemente (48) verbunden sind, an denen jeweils eine Führungsmutter (50) befestigt ist, die mit einer zugehörigen vertikalen Schraube (52) in Eingriff steht, wobei die beiden Enden dieser Schraube an der Tragstruktur (22) der Station verdrehbar gehalten sind, und wobei an dem oberen Ende der beiden Schrauben (52) eine zugehörige Riemenscheibe (54) angeordnet ist, über die ein Riemen läuft, der auch über eine Antriebsscheibe (56) verläuft, die durch einen Getriebemotor (58) angetrieben ist, der an der Tragstruktur (22) befestigt ist.

## Revendications

1. Station d'enlèvement et de dégagement (20) pour lignes de distribution de produits préalablement disposés en rangées sur un transporteur à bande principal, ladite station (20) étant interposée entre deux portions consécutives (10A, 10B) d'un transporteur à bande principal sur lequel les produits sont disposés en rangées, comprenant une paire de transporteurs à bande identiques superposés (24S, 24I) de même largeur que le transporteur à bande principal et alignés avec ce dernier, vus en plan, ladite paire de transporteurs à bande (24S, 24I) étant mobiles verticalement entre deux positions, à savoir:
une première position dans laquelle le transporteur à bande supérieur (24S) est à la même hauteur que le transporteur à bande principal, tandis que le transporteur à bande inférieur (24I) est à la même hauteur qu'un premier transporteur à bande de retrait (32₁) adjacent s'étendant, vu en plan, perpendiculairement au transporteur à bande principal ; et
une seconde position dans laquelle le transporteur à bande (24I) est à la même hauteur que le transporteur à bande principal, tandis que le transporteur à bande supérieur (24S) est à la même hauteur qu'un second transporteur à bande de retrait (32₂) adjacent s'étendant également, vu en plan, perpendiculairement au transporteur à bande principal ;
un poussoir relatif (60₁, 60₂) étant associé au premier et au second transporteurs à bande de retrait (32₁, 32₂) en vue de transférer la rangée de produits présents sur le transporteur à bande (24S, 24I) relatif de la paire de ce dernier sur le transporteur à bande de retrait (32₁, 32₂) correspondant.

2. Station d'enlèvement et de dégagement (20) selon la revendication 1, dans laquelle la paire de transporteurs à bande (24S, 24I) est supportée par une paire d'épaulements verticaux parallèles (40), un de chaque côté, qui sont chacun supportés par un chariot plus intérieur (42) coulissant verticalement grâce à quatre roues libres (44) positionnées à raison de deux de chaque côté et fixées à la structure de support (22) de la station d'enlèvement et de dégagement (20), les deux chariots (42) étant reliés ensemble par deux éléments (46) parallèles, longitudinaux et horizontaux, reliés ensemble au voisinage de leurs extrémités par des éléments transversaux relatifs (48) à chacun desquels est fixé un écrou d'avance (50) dans lequel est engagée une vis verticale relative (52), les deux extrémités de cette dernière étant supportées à rotation par la structure (22) de la station, sur l'extrémité supérieure des deux vis (52) étant engagée par clavetage une poulie relative (54) autour de laquelle est montée une courroie qui s'engage également avec une poulie motrice (56) entraînée par un moteur réducteur (58) fixé à la structure de support (22).
